# EUROPÄISCHE PATENTANMELDUNG

(11) **EP 4 681 920 A1**
(43) Veröffentlichungstag der Anmeldung: **21.01.2026**
(21) Anmeldenummer: 24189054.0
(22) Anmeldetag: 17.07.2024
(51) Int. Cl.: B33Y 70/00, C22C 9/00, C22C 1/02, C22C 1/03, C22C 27/00, C22C 27/06, C22C 1/04

(54) **VORLEGIERUNG FÜR AM**

(71) Anmelder: ManVision GmbH & Co. KG, 58675 Hemer (DE)
(72) Erfinder: Saenko, Ivan, 58675 Hemer (DE); Schmidt, Dominik, 58675 Hemer (DE)
(74) Vertreter: Fenner, Seraina

(57) **Zusammenfassung**

Vorlegierung für die Herstellung einer Cu-Basislegierung für additive Fertigung, wobei die Vorlegierung 30 bis 90 Gew. % Nb, 10 bis 70 Gew. % Cr und herstellungsbedingte Verunreinigungen von max. 0,5 Gew. % enthält.

## Beschreibung

Die Erfindung betrifft eine Vorlegierung für die Herstellung einer Cu-Basislegierung für additive Fertigung sowie deren Verwendung und ein Herstellverfahren einer Cu-Basislegierung für die additive Fertigung mit einem Cu-Gehalt von > 89%, einem Nb-Gehalt von >2%,einem Cr-Gehalt von 3 bis 7% und vorzugsweise weiteren Elementen, sowie Rest Verunreinigungen.

Aus dem Stand der Technik sind bisher nur wenige Cu-Basislegierungen für die additive Fertigung bekannt. Solche Legierungen wie beispielsweise die GRCOP42 beinhalten meist Niob Nb als Legierungszusatz um die Festigkeit im Werkstoff zu erhöhen sowie eine hohe Temperatur- und Kriechbeständigkeit bei gleichzeitig maximaler Leitfähigkeit zu erzielen. Nachteilig bei Nb als Legierungszusatz ist jedoch, dass Nb ein Hochtemperaturlegierungselement ist und sich die Schmelztemperaturen zwischen der Legierungsbasis, hier Cu, und Nb stark unterscheiden, was zur ungleichmässigen Verteilung und Inhomogenität im Gefüge sowie Seigerungen in den Endprodukten führt. Um dies zu vermeiden, sollte der Schmelzprozess nah der Schmelztemperatur des Hochtemperaturelements, was bei Nb 2477°C entspricht liegen. Dies ist allerdings heutzutage durch eine maximale Anlagenschmelztemperatur der etablierten Industrieproduzenten für Kupferlegierungen von ca. 1700°C limitiert.

Darüber hinaus ist eine unbegrenzte Erhöhung der Schmelztemperatur des Prozesses durch Materialeigenschaften des Basiselementes Cu der Legierung aufgrund von Siedepunkt und Verdunstung begrenzt. Z.B. zum idealen Erschmelzen bzw. Einbringung von Niob in die Kupfermatrix soll der Schmelzprozess bei über 1.900-2000°C stattfinden, was aktuell einerseits anlagentechnisch nicht möglich ist und andererseits zu extrem hohen Materialverlusten aufgrund des Verdampfens führen würde. Damit der Legierungsprozess dennoch gelingt, ist eine sehr lange Schmelzzeit von mehr als 9h notwendig, um die schwache Diffusion aufgrund der niedrigen Schmelztemperatur zu kompensieren. Trotz der Kompensation durch Schmelzzeit, fügt sich Nb nicht optimal in die Cu-Matrix ein, wodurch es zu Seigerungen respektive Inhomogenität innerhalb des Gefüges kommt, da die Diffusion für reines Nb immer noch unter der Aktivierungsgrenze der Diffusion liegt.

Um dieses Problem mit den Hochtemperaturlegierungselementen zu umgehen, werden diese meist als Vorlegierungen hergestellt und zur Herstellung der Endlegierung mit dem Basiselement vermengt.

Es ist Aufgabe der Erfindung eine Vorlegierung und deren Verwendung sowie ein Herstellverfahren für eine Cu-Basislegierung vorzuschlagen, die Qualitätsausfälle durch Verbesserung der Homogenität des Gefüges reduziert und eine wirtschaftliche Herstellung solcher Teile erlaubt.

Diese Aufgabe wird erfindungsgemäss dadurch gelöst, dass die Vorlegierung 30 bis 90 Gew. % Nb, 10 bis 70 Gew. % Cr und herstellungsbedingte Verunreinigungen von max. 0,5 Gew. % enthält. Diese Aufgabe wird auch dadurch erfindungsgemäss gelöst, dass die Vorlegierung mit Cu vermengt wird, um eine Legierung zu erzielen die einen Cu-Gehalt von > 89%, einen Nb-Gehalt von >2% und einen Cr-Gehalt von 3 bis 7% aufweist und das Verfahren zur Herstellung einer Cu-Basislegierung für die additive Fertigung mit einem Cu-Gehalt von > 89%, einem Nb-Gehalt von > 2% und einem Cr-Gehalt von 3 bis 7% mit einer Schmelztemperatur im Herstellverfahren der Cu-Basislegierung von < 1550 und einer Schmelzzeit von max. 4h aufgeschmolzen wird.

Die erfindungsgemässe Vorlegierung zur Herstellung einer Kupfer-Basislegierung für additive Fertigung enthält 30 bis 90 Gew. % Niob Nb, 10 bis 70 Gew. % Chrom Cr und herstellungsbedingte Verunreinigungen von max. 0,5 Gew. %. Optional enthält die Vorlegierung weitere Element bis zum Erreichen der 100 Gew. %. Eine solche Zusammensetzung weist einen Schmelzpunkt, der im Bereich von 1500 bis 1750°C liegt, auf, wodurch die Homogenität bei der Herstellung einer Cu-Basislegierung mit dem Legierungszusatzelement Niob aufgrund der Verringerung der Schmelztemperatur des Herstellungsverfahrens der Cu-Basislegierung im Vergleich zum herkömmlichen Herstellverfahren einer GRCOP42 Legierung, massgeblich verbessert wird. Dadurch fügt sich das Niob optimal in die Matrix ein und gewährleistet beim Verdünnen mit Cu eine homogene Cu-Basislegierung. Durch das Einbinden von Nb in die Cu-Basislegierung mittels der erfindungsgemässen Vorlegierung kann auch neben der Schmelztemperatur des Herstellverfahrens der Cu-Basislegierung die Schmelzzeit verringert werden.

Es ist vorteilhaft, wenn die Vorlegierung 40 bis 65 Gew. % Nb enthält. Die Reduktion von Nb in der Vorlegierung ermöglicht eine weitere Schmelzpunktreduktion in der Vorlegierung. Wodurch sich auch die Cu-Basislegierung bei tieferer Schmelztemperatur und während einer geringeren Zeitspanne erschmelzen lässt. Entsprechend sind die Gew. % von Cr angepasst und betragen max. 60 Gew. % und herstellungsbedingte Verunreinigungen von max. 0,5 Gew. %.

Vorzugsweise enthält die Vorlegierung 50 bis 55 Gew. % Nb, max. 50 Gew. % Cr und herstellungsbedingte Verunreinigungen von max. 0,5 Gew. %. Wie bereits oben erwähnt wird durch die Reduktion von Nb eine Reduktion des Schmelzpunktes in der Vorlegierung erzielt, die wiederum einen Effekt auf den Materialverlust hat. Durch den tieferen Schmelzpunkt der Vorlegierung kann auch eine tiefere Schmelztemperaturen für die Herstellung der Cu-Basislegierung erzielt werde was die Verdampfung des Materials signifikant reduziert werden und so der direkte Output erhöht werden.

Als bevorzugte Ausführungsform hat sich gezeigt, wenn die Vorlegierung Cu enthält, max. 25 Gew. %. Da aufgrund einer Zulegierung von Cr nur eine Schmelzpunktreduktion bis 1700°C erreicht werden kann, wird zur weiteren Reduktion des Schmelzpunkts der Vorlegierung noch Cu in die Vorlegierung beigemischt. Dadurch kann die Schmelzpunkt bis auf ca. 1500°C reduziert werden, abhängig des Gew. % Cu in der Vorlegierung.

Es ist vorteilhaft, wenn die Vorlegierung aus 30 bis 70 Gew. % Nb, 10 bis 60 Gew. % Cr, 5 bis 20 Gew. % Cu und herstellungsbedingte Verunreinigungen von max. 0,5 Gew. % besteht. Eine weitere vorteilhafte Zusammensetzung besteht aus 55 bis 65 Gew. % Nb, 15 bis 25 Gew.% Cr, Rest Gew. % Cu und herstellungsbedingte Verunreinigungen von max. 0,5 Gew. %. Speziell bevorzugt ist die Zusammensetzung der Vorlegierung mit 60 Gew. % Nb, 20 Gew. % Cr, 20 Gew. % Cu und herstellungsbedingte Verunreinigungen von max. 0,5 Gew. %.

Es ist vorteilhaft, wenn die erfindungsgemässe Vorlegierung zur Herstellung einer Cu-Basislegierung für die additive Fertigung mit einem Cu-Gehalt von > 89%, einem Nb-Gehalt von > 2%, einem Cr-Gehalt von 3 bis 7% und vorzugsweise weiteren Legierungselementen sowie möglichen herstellungsbedingte Verunreinigungen von max. 0,5 Gew. % verwendet wird. Speziell bevorzugt wird die erfindungsgemässe Vorlegierung für die Herstellung der Legierung GRCOP42 mit der Zusammensetzung 92 Gew. % Cu, 3 Gew. % Nb, 3 bis 4 Gew. % Cr und Rest Verunreinigungen verwendet.

Es ist vorteilhaft, wenn die Schmelztemperatur zur Herstellung der Cu-Basislegierung < 1550°C beträgt. Dadurch kann einerseits der Materialverlust aufgrund des reduzierten Materialverdampfens verbessert werden und andererseits auch der Verschleiss der Verbrauchsmaterialien wie Tiegel und Induktionsspulen.

Vorzugsweise liegt die Schmelztemperatur zur Herstellung der Cu-Baisislegierung zwischen 1400 bis 1550°C. Wie bereits erwähnt, kann durch die Einsparung des Materialverlusts wie auch des Verbrauchsmaterials die Wirtschaftlichkeit der Herstellung der Endlegierung wesentlich erhöht werden.

Die erfindungsgemässe Vorlegierung dient der Verwendung zur Herstellung einer Cu-Basislegierung für die additive Fertigung, wobei die Vorlegierung mit Cu vermengt wird, um eine Legierung zu erzielen, die einen Cu-Gehalt von > 89%, einen Nb-Gehalt von > 2%,einem Cr-Gehalt von 3 bis 7% aufweist und vorzugsweise herstellungsbedingte Verunreinigungen von max. 0,5 Gew. %. Vorzugsweise wird die erfindungsgemässe Vorlegierung zur Verwendung zur Herstellung der Legierung GRCOP42 mit der Zusammensetzung 92 Gew. % Cu, 3 Gew. % Nb, 3 bis 4 Gew. % Cr und Rest Verunreinigungen eingesetzt.

Das erfindungsgemässe Verfahren zur Herstellung einer Cu-Basislegierung für die additive Fertigung mit einem Cu-Gehalt von > 89%, einem Nb-Gehalt von > 2%, einem Cr-Gehalt von 3-7% und Rest Verunreinigungen, zeichnet sich dadurch aus, dass die Legierung mit einer Schmelztemperatur von < 1550°C und einer Schmelzzeit von max. 4 h homogen aufgeschmolzen wird. Vorzugsweise liegt die Schmelztemperatur des Herstellungsverfahrens für die Cu-Basislegierung im Bereich von 1400 bis 1550°C.

Es ist vorteilhaft, wenn zur Herstellung der Cu-Basislegierung die erfindungsgemässe Vorlegierung beigemengt wird.

Alle Ausgestaltungmöglichkeiten sind untereinander frei kombinierbar sowie zur Vermeidung von Wiederholungen sich die Merkmale der Vorlegierung auch automatisch auf das Verfahren und die Verwendung und umgekehrt beziehen.

Ausführungsbeispiele der Erfindung werden anhand einer Tabelle aufgezeigt, wobei sich die Erfindung nicht nur auf das Ausführungsbeispiele beschränkt. Es zeigt:

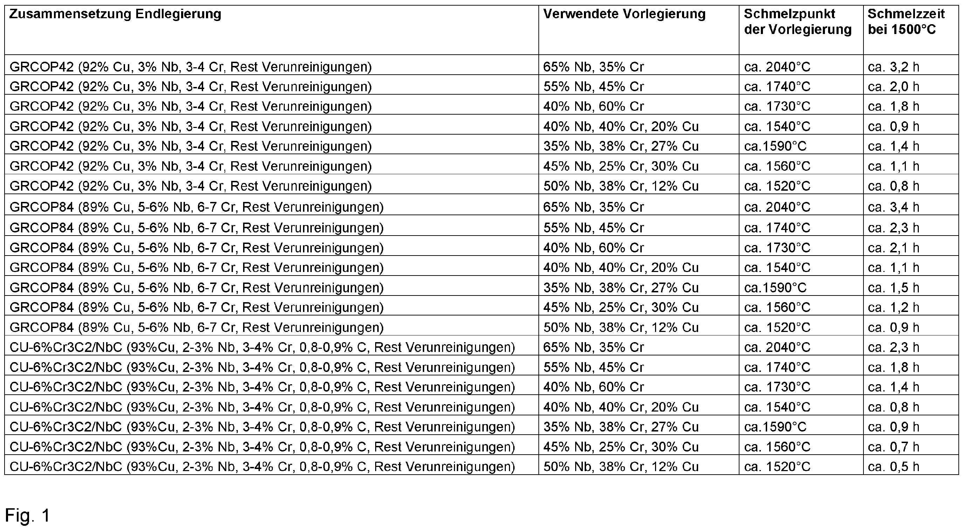

- Fig. 1: eine Tabelle mit unterschiedlichen Endlegierungen und unterschiedlichen Zusammensetzungen der erfindungsgemässen Vorlegierungen und den entsprechenden Schmelzpunkten und Schmelzzeiten bei einer Prozessschmelztemperatur von 1550°C.

Fig. 1 zeigt eine Tabelle mit möglichen Ausführungsformen der erfindungsgemässen Vorlegierung, die für die Anwendung zur Herstellung einer Endlegierung eingesetzt werden können. Fig. 1 zeigt nur eine paar mögliche Anwendungen der erfindungsgemässen Vorlegierung für die Herstellung ein paar möglicher Endlegierungen, selbstverständlich sind noch weit mehr Zusammensetzung der Endlegierung einer Kupferbasislegierung wie auch der Vorlegierungen möglich. Zudem können die aufgezeigten Kupferbasislegierungen auch mit anderen Zusammensetzungen der erfindungsgemässen Vorlegierung hergestellt werden wie auch die genannten Vorlegierungen für andere Zusammensetzungen von Kupferbasislegierungen verwendet werden.

Die Tabelle zeigt beispielsweise, dass für eine GRCO42 Kupferbasislegierung eine Vorlegierung mit 65% Nb und 35%Cu eingesetzt werden kann, die einen Schmelzpunkt hat der bei ca. 2040°C liegt, wobei die Schmelzzeit im Herstellungsprozess für eine GRCO42 Kupferbasislegierung bei einer Temperatur 1550°C bei ca. 3.2 h liegt. Bei den Vorlegierungen ohne Cu ist klar erkennbar, je tiefer der Nb Anteil ist, desto geringer ist der Schmelzpunkt der Vorlegierung, was wiederum eine Reduktion der Schmelzzeit mit sich bringt. Gut ersichtlich aus der Tabelle ist, dass durch die Zugabe von Cu in der Vorlegierung, der Schmelzpunkt der Vorlegierung deutlich sinkt und sich dadurch auch die Schmelzzeit bei der Herstellung der Kupferbasislegierung reduziert.

## Patentansprüche

1. Vorlegierung für die Herstellung einer Cu-Basislegierung für additive Fertigung **dadurch gekennzeichnet, dass** die Vorlegierung 30 bis 90 Gew. % Nb, 10 bis 70 Gew. % Cr und herstellungsbedingte Verunreinigungen von max. 0,5 Gew. % enthält.

2. Vorlegierung nach Anspruch 1, **dadurch gekennzeichnet, dass** die Vorlegierung 40 bis 65 Gew. % Nb, max. 60 Gew. % Cr und herstellungsbedingte Verunreinigungen von max. 0,5 Gew. %enthält.

3. Vorlegierung nach Anspruch 1, **dadurch gekennzeichnet, dass** die Vorlegierung 50 bis 60 Gew. % Nb, max. 50 Gew. % Cr und herstellungsbedingte Verunreinigungen von max. 0,5 Gew. %enthält.

4. Vorlegierung nach Anspruch 1, **dadurch gekennzeichnet, dass** die Vorlegierung Cu enthält max. 25 Gew. %.

5. Vorlegierung nach Anspruch 1, **dadurch gekennzeichnet, dass** die Vorlegierung aus 30 bis 70 Gew. % Nb, 10 bis 60 Gew. % Cr, 5 bis 20 Gew. % Cu und herstellungsbedingte Verunreinigungen von max. 0,5 Gew. % besteht.

6. Vorlegierung nach Anspruch 1, **dadurch gekennzeichnet, dass** die Vorlegierung aus 50 bis 65 Gew. % Nb, 15 bis 25 Gew. % Cr, 15 bis 25 Gew. % Cu und herstellungsbedingte Verunreinigungen von max. 0,5 Gew. % besteht.

7. Vorlegierung nach Anspruch 1 zur Herstellung einer Cu-Basislegierung für die additive Fertigung mit einem Cu-Gehalt von > 89%, einem Nb-Gehalt von >2%, und einem Cr-Gehalt von 3-7%.

8. Vorlegierung nach Anspruch 1, **dadurch gekennzeichnet, dass** die Vorlegierung einen Schmelzpunkt < 1750°C aufweist.

9. Vorlegierung nach Anspruch 1, **dadurch gekennzeichnet, dass** die Vorlegierung einen Schmelzpunkt von 1500 bis 1740°C aufweist.

10. Verwendung einer Vorlegierung nach Anspruch 1 bis 9 zur Herstellung einer Cu-Basislegierung für die additive Fertigung **dadurch gekennzeichnet, dass** die Vorlegierung mit Cu vermengt wird, um eine Legierung zu erzielen die einen Cu-Gehalt von > 89%, einem Nb-Gehalt von >2%, einem Cr-Gehalt von 3-7% aufweist.

11. Verfahren zur Herstellung einer Cu-Basislegierung für die additive Fertigung mit einem Cu-Gehalt von > 89%, einem Nb-Gehalt von > 2%, einem Cr-Gehalt von 3-7 Gew. %, **dadurch gekennzeichnet, dass** die Legierung mit einer Schmelztemperatur zur Herstellung der Cu-Basislegierung von < 1550°C und einer Schmelzzeit von max. 4h aufgeschmolzen wird.

12. Verfahren nach Anspruch 11 **dadurch gekennzeichnet, dass** die Cu-Basislegierung 92 Gew. % Cu, 3 Gew. % Nb, 3 bis 4 Gew. % Cr und Rest Verunreinigungen enthält.

13. Verfahren nach Anspruch 11 oder 12, **dadurch gekennzeichnet, dass** zur Herstellung der Cu-Basislegierung die Vorlegierung nach Anspruch 1 bis 9 beigemengt wird.
